# EUROPEAN PATENT APPLICATION

(11) **EP 1 217 607 A1**
(43) Date of publication of application: **26.06.2002**
(21) Application number: 00939086.5
(22) Date of filing: 16.06.2000
(51) Int. Cl.: G10L 11/02, H04J 3/17

(54) **VOICE/VOICELESS FRAME JUDGING DEVICE AND JUDGING METHOD THEREFOR**

(30) Priority: 23.06.1999 JP 17616799
(71) Applicant: NEC Corporation, Minato-ku, Tokyo 108-8001 (JP)
(72) Inventor: Serizawa, Masahiro, NEC Corporation, Minato-ku, Tokyo 108-8001 (JP)
(74) Representative: VOSSIUS & PARTNER
(86) International application number: JP0003954
(87) International publication number: WO0079516

(57) **Abstract**

When discrimination is made for each predetermined period whether an input signal is a speech signal or a non-speech signal, the discrimination is made using a single algorithm even if the input signal has several frequency bands and several period lengths.

A unit length dividing circuit 20 divides the signal inputted from an input terminal 10 into unit lengths (for example, 2.5 msec) shorter than a frame length (for example, 10 msec) and passes them to a band-conversion circuit 30. The band conversion circuit 30 limits the frequency band of the input signal divided into frames of a predetermined length and passed by the unit length dividing circuit 20, to a frequency band that can be checked by a checking circuit 40 and passes the signal to the checking circuit 40. The checking circuit 40 makes a discrimination between speech and non-speech periods for each of the short periods passed by the unit length dividing circuit 20 and passes the result for each frame of the input signal to a unit length conversion circuit 50. The unit length conversion circuit 50 gives a result for each frame, based on the multiple results which correspond to the each frame and which were passed by the checking circuit 40, and outputs it from an output terminal 60.

## Description

### TECHNICAL FIELD

The present invention relates to a speech and non-speech frame discriminator and a method for discriminating between speech and non-speech frames. More particularly, it relates to a speech/non-speech frame discrimination system that determines for each predetermined period (predetermined frame) whether an input signal is a speech signal or a non-speech signal.

### BACKGROUND ART

This type of conventional speech frame discriminator is used for discriminating between speech periods and non-speech periods in order to reduce the average transmission rate by encoding non-speech periods at a lower rate than speech periods. For example, there is a discriminator used by Annex B to ITU-T Recommendation G. 729. This conventional device uses four types of feature parameters extracted from input signals for each 10-msec frame to determine whether the frame is a speech period (speech frame) or a non-speech period (non-speech frame). For that, the extracted feature parameters are compared with predefined discrimination parameters (thresholds).

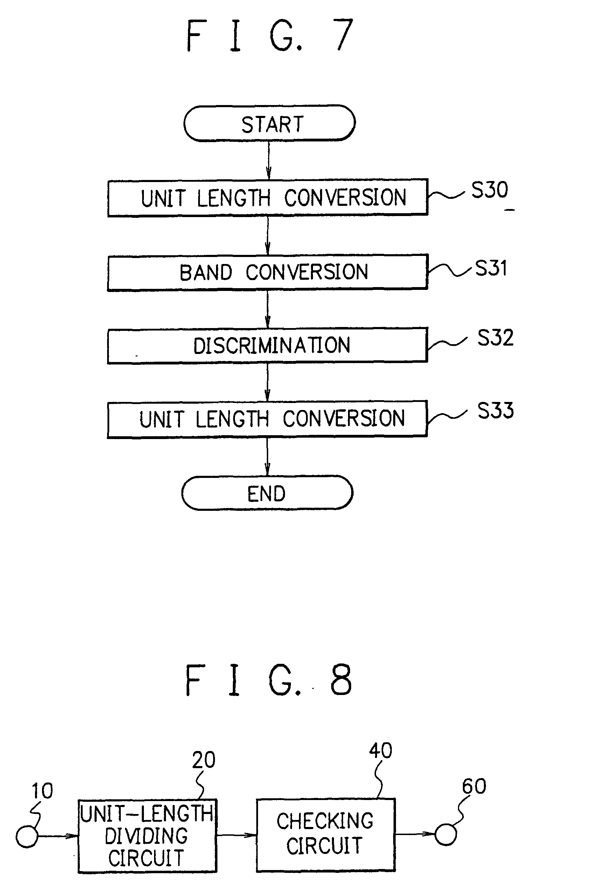

The conventional device will be described with reference to Fig. 8. A unit length dividing circuit 20 divides the signal inputted from an input terminal 10 into frames of a length (for example, 10 msec) equivalent to a predetermined period and passes them to a checking circuit 40. The checking circuit 40 checks the input signal passed frame by frame from the unit length dividing circuit 20 to detect and discriminate whether the frame is a speech period or a non-speech period, and outputs the result for each frame from an output terminal 60.

The problem with the conventional system shown in Fig. 8 is that when designing a speech/non-speech frame discriminator which can accommodate various input signals with different frequency bands and unit lengths (frame lengths) for discrimination, the discrimination parameters must be set for individual cases to obtain the results appropriate for all cases. This is because the use of a single set of discrimination parameters results in lower discrimination capability.

An object of the present invention is to provide an apparatus and method for determining whether the frame is a speech frame or a non-speech frame using a single algorithm even if an input signal is sampled at several frequency bands and with several period lengths for the discrimination.

### DISCLOSURE OF THE INVENTION

The present invention provides a speech/non-speech frame discriminator for determining for each predetermined period (predetermined frame) whether an input signal is a speech signal or a non-speech signal, characterized by comprising band conversion means for converting the band of the above described input signal and discrimination means for making the above described discrimination based on the signal after the band conversion. The discriminator is characterized in that the discrimination means is designed for signals limited to a predetermined band.

Also, the present invention provides a speech/non-speech frame discriminator for determining for each predetermined period (predetermined frame) whether an input signal is a speech signal or a non-speech signal, characterized by comprising dividing means for making a division into shorter periods than the above described predetermined period, discrimination means for making the above described discrimination for each short period, and unit length conversion means for making discrimination for said predetermined period based on the result for the short periods.

The speech/non-speech frame discriminator is characterized in that the above described unit length conversion means determines said predetermined period to be a speech period when any of said short periods is determined to be a speech period. The speech/non-speech frame discriminator further comprises band conversion means for converting the band of the above described input signal and is characterized in that the above described discrimination means makes the above described discrimination based on the signal after the band conversion. Moreover, the speech/non-speech frame discriminator is characterized in that the above described discrimination means is designed for signals limited to a predetermined band and a predetermined unit length.

Furthermore, the present invention provides a speech/non-speech frame discrimination method for determining for each predetermined period (predetermined frame) whether the input signal is a speech signal or non-speech signal, characterized by comprising a band conversion step of converting the band of the above described input signal and a discrimination step of making the above described discrimination based on the signal after the band conversion.

Also, the present invention provides a speech/non-speech frame discrimination method for determining for each predetermined period (predetermined frame) whether the input signal is a speech signal or a non-speech signal, characterized by comprising a dividing step of making a division into shorter periods than the above described predetermined period, a discrimination step of making the above described discrimination for each short period, and a unit length conversion step of making discrimination for said predetermined period based on the results for the short periods.

The speech/non-speech frame discrimination method is characterized in that the above described unit length conversion step determines said predetermined period to be a speech period when any of said short periods is determined to be a speech period. The speech/non-speech frame discrimination method further comprises a band conversion step of converting the band of the above described input signal and is characterized in that the above described discrimination step makes the above described discrimination based on the signal after the band conversion.

The operation of the present invention will be described below. The present invention is provided with configuration parameters capable of discriminating between speech and non-speech frames using a predetermined frequency band and a predetermined unit length. In other words, the present invention is provided with a discrimination circuit that has configuration parameters designed for signals limited to a predetermined band and a predetermined unit length. A discrimination is made after a limit is placed on the band to ensure that the input signal has the same frequency band as the predetermined frequency band. This eliminates the need for new configuration parameters to accommodate different bands. However, the input signal must have a band equal to or wider than the predetermined band.

If a frame length is different from a predetermined unit time length, a discrimination is made for the frame based on the results at periods of the predetermined unit length. For example, if any results at periods of the predetermined unit length is "speech," a discrimination result for the frame is of "speech" can be predetermined to the frame. The frame length here must be equal to or longer than the predetermined unit time length.

### BRIEF DESCRIPTION OF THE DRAWINGS

Fig. 1 is a block diagram showing an examplary configuration of a first speech/non-speech frame discriminator according to the present invention;
Fig. 2 is a flowchart showing the operation of the block in Fig. 1;
Fig. 3 is a block diagram showing an examplary configuration of a second speech/non-speech frame discriminator according to the invention;
Fig. 4 is a flowchart showing the operation of the block in Fig. 3;
Fig. 5 is a diagram showing a frame configuration to illustrate the operation of the block in Fig. 3;
Fig. 6 is a block diagram showing an examplary configuration of a third speech/non-speech frame discriminator according to the invention;
Fig. 7 is a flowchart showing the operation of the block in Fig. 6; and
Fig. 8 is a block diagram showing an examplary configuration of a conventional speech/non-speech frame discriminator.

### BEST MODE FOR CARRYING OUT THE INVENTION

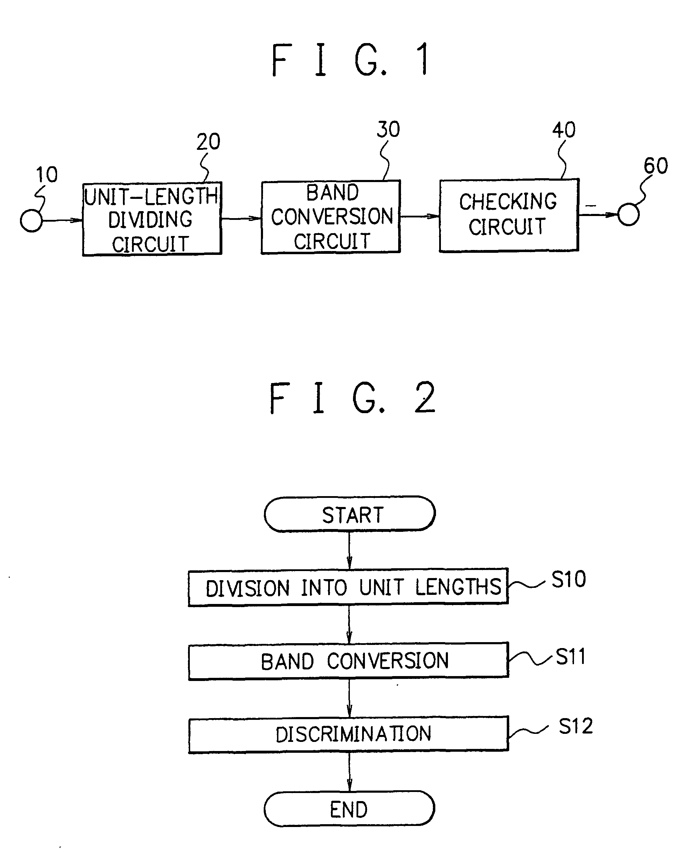

Embodiments of the present invention will be described with reference to the drawings. Fig. 1 is a block diagram showing an examplary configuration of a first speech/non-speech frame discriminator according to the present invention, where components equivalent to those in Fig. 8 are denoted by the same reference numerals as those used for the corresponding components in Fig. 8. Fig. 2 is a flowchart showing the operation of the configuration in Fig. 1. A unit length dividing circuit 20 divides the signal inputted from an input terminal 10 into frames of a length (for example, 10 msec) equivalent to a predetermined period (Step S10) and passes them to a band conversion circuit 30.

The band conversion circuit 30 limits the frequency band of the input signal divided into frames of a predetermined length and passed by the unit length dividing circuit 20, to a frequency band that can be checked by a checking circuit 40 (Step S11) and passes the signal to the checking circuit 40. The checking circuit 40 determines whether speech period or non-speech period(Step S12) for each of the frames passed by the unit length dividing circuit 20 and outputs the result for each frame of the input signal from an output terminal 60.

A circuit with a band-pass filtering or low-pass filtering function, for example, can be employed as the band conversion circuit. There is no doubt that the input signal must have a band equal to or wider than the band after conversion by the band conversion circuit.

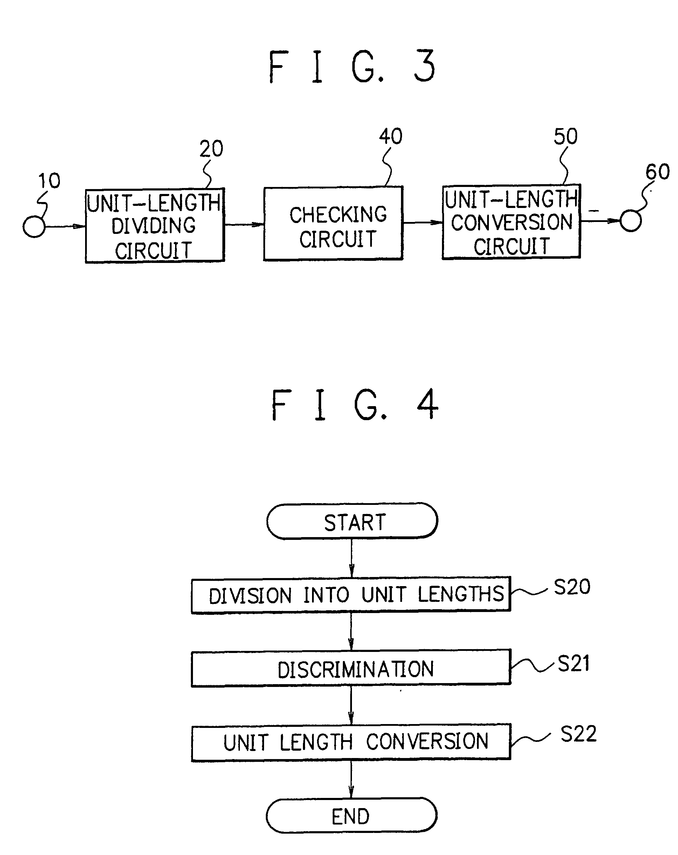

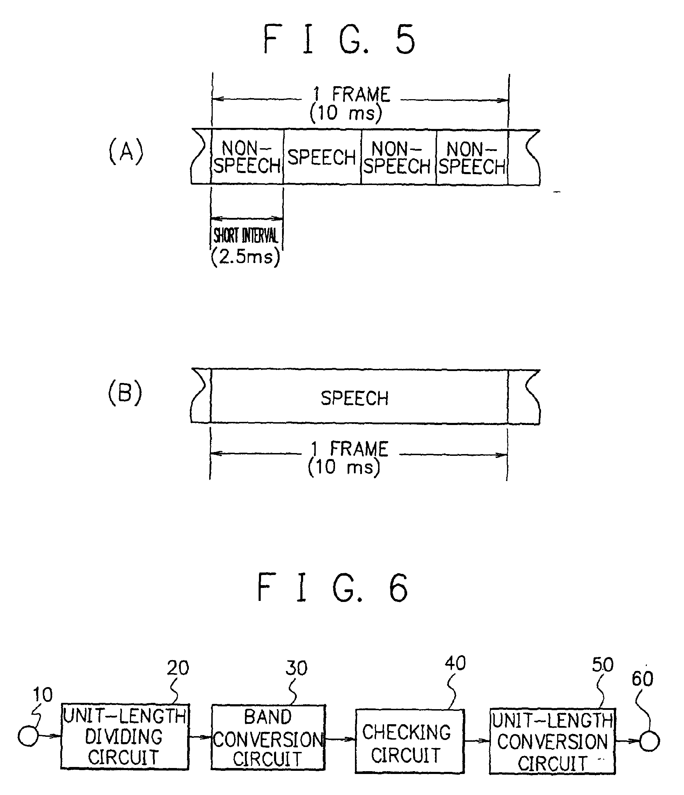

Fig. 3 is a block diagram showing an examplary configuration of a second speech/non-speech frame discriminator according to the present invention, where components equivalent to those in Figs. 1 and 8 are denoted by the same reference numerals as those used for the same components in Figs. 1 and 8. Fig. 4 is a flowchart showing the operation of the configuration in Fig. 3. As shown in Fig. 5(a), a unit length dividing circuit 20 divides the signal inputted from an input terminal 10 into unit lengths (for example, 2.5 msec) shorter than a frame length (for example, 10 msec) (Step S20) and passes them to a checking circuit 40. The checking circuit 40 determines whether a speech period or a non-speech period(Step S21) for each of the short periods passed by the unit length dividing circuit 20 and passes the result for each frame of the input signal to a unit length conversion circuit 50.

The unit length conversion circuit 50 gives a result for each frame (Step S22), based on the multiple results (results of either "speech" or "non-speech " on the short periods in Fig. 5(a)) which correspond to the each frame and which were passed by the checking circuit 40, and outputs it from an output terminal 60. In this case, if any of the short periods composing one frame is predetermined a result for "present" as shown in Fig. 5(a), this frame is predetermined a result for "speech" as shown in Fig. 5(b). There is no doubt that the frame length here must be equal to or longer than a predetermined unit time length.

Fig. 6 is a block diagram showing an examplary configuration of a third speech/non-speech frame discriminator according to the present invention, where components equivalent to those in Figs. 1, 3, and 8 are denoted by the same reference numerals as those used for the same or corresponding components in Figs. 1, 3, and 8. Fig. 7 is a flowchart showing the operation of the configuration in Fig. 6. As shown in Fig. 5(a), a unit length dividing circuit 20 divides the signal inputted from an input terminal into unit lengths (for example, 2.5 msec) shorter than a frame length (for example, 10 msec) (Step S30) and passes them to a band conversion circuit 30. The band conversion circuit 30 limits the frequency band of the input signal divided into frames of a predetermined length and passed by the unit length dividing circuit 20, to a frequency band that can be checked by a checking circuit 40 (Step S31) and passes the signal to the checking circuit 40.

The checking circuit 40 determines a speech period or a non-speech period(Step S32) for each of the short periods passed by the band conversion circuit 30 and passes the result for each frame of the input signal to a unit length conversion circuit 50. The unit length conversion circuit 50 gives a result on each frame (Step S33), based on the multiple results (results of either "speech" or "non-speech" on the short periods in Fig. 5(a)) which correspond to the each frame and which were passed by the checking circuit 40, and outputs it from an output terminal 60.

Again, as shown in Fig. 5(a), if any of the short periods composing one frame is predetermined a result for "speech", this frame is predetermined a result for "speech" as shown in Fig. 5(b).

### INDUSTRIAL APPLICABILITY

The first advantage of the present invention is that in designing a speech/non-speech frame discriminator that can accommodate various input signals with different frequency bands, results appropriate for all cases can be obtained. This is because a single discrimination parameter can be used for discrimination.

The second advantage of the present invention is that in designing a speech/non-speech frame discriminator that can accommodate various input signals with different unit lengths (frame lengths) for discrimination, results appropriate for all cases can be obtained. This is because a single discrimination parameter can be used for discrimination.

## Claims

1. A speech/non-speech frame discriminator for determining for each predetermined period whether an input signal is a speech signal or a non-speech signal, **characterized by** comprising band conversion means for converting the band of said input signal and discrimination means for making said discrimination based on the signal after the band conversion.

2. The speech/non-speech frame discriminator claimed in claim 1, **characterized in that** the discrimination means is designed for signals limited to a predetermined band.

3. A speech/non-speech frame discriminator for determining for each predetermined period whether an input signal is a speech signal or a non-speech signal, **characterized by** comprising dividing means for making a division into shorter periods than said predetermined period, discrimination means for making said discrimination for each short period, and unit length conversion means for making discrimination for said predetermined period based on the results for the short periods.

4. The speech/non-speech frame discriminator claimed in claim 3, **characterized in that**
said unit length conversion means determines said predetermined period to be a speech period when any of said short periods is determined to be a speech period.

5. The speech/non-speech frame discriminator claimed in claim 3 or 4, **characterized in that**
said discrimination means is designed for signals limited to a predetermined band.

6. The speech/non-speech frame discriminator claimed in claim 3 or 4, further comprising
a band conversion means for converting the band of said input signal and **characterized in that**
said discrimination means makes said discrimination based on the signal after the band conversion.

7. The speech/non-speech frame discriminator claimed in claim 6, **characterized in that**
said discrimination means is designed for signals limited to a predetermined band and unit length.

8. A speech/non-speech frame discrimination method for determining for each predetermined period whether an input signal is a speech signal or a non-speech signal, **characterized by** comprising the step of
converting the band of said input signal and,
making said discrimination based on the signal after the band conversion.

9. The speech/non-speech frame discrimination method according to claim 8, **characterized in that**
making said discrimination is designed for signals limited to a predetermined band.

10. A speech/non-speech frame discrimination method for determining for each predetermined period whether an input signal is a speech signal or a non-speech signal, **characterized by** comprising the step of
making a division into shorter periods than said predetermined period,
making said discrimination for each short period, and
making discrimination for said predetermined period based on the results for the short periods.

11. The speech/non-speech frame discrimination method according to claim 10, **characterized in that**
said predetermined period is determined to be a speech period when any of said short periods is determined to be a speech period.

12. The speech/non-speech frame discrimination method according to claim 10 or 11, **characterized in that**
making said discrimination is designed for signals limited to a predetermined band.

13. The speech/non-speech frame discrimination method according to claim 10 or 11, further comprising a step of
converting the band of said input signal and **characterized in that**;
said discrimination for each short period is made based on the signal after the band conversion.

14. The speech/non-speech frame discrimination method according to claim 13, **characterized in that**
making said discrimination is designed for signals limited to a predetermined band and unit length.
